# EUROPEAN PATENT APPLICATION

(11) **EP 0 837 581 A2**
(43) Date of publication of application: **22.04.1998**
(21) Application number: 97110068.0
(22) Date of filing: 19.06.1997
(51) Int. Cl.: H04L 12/44

(54) **Hot-swappable interconnections for stackable network hubs**

(30) Priority: 15.10.1996 US 732652
(71) Applicant: Hewlett-Packard Company, Palo Alto, California 94304 (US)
(72) Inventor: James, Michael R., Roseville, CA 95747 (US); Liu, Ming, San Diego, CA 92128-4425 (US); Weidman, Paul E., Sacramento, CA 95827 (US)
(74) Representative: Schoppe, Fritz, Dipl.-Ing.

(57) **Abstract**

A hot-swap module provides a method of inserting a network hub into a network hub stack and removing a network hub from a network hub stack without interrupting communications within the stack. The hot-swap module provides connections to the in and out ports of adjacent network hubs, and the in and out ports of the hot-swappable hub. The module includes conductors that couple global signals between the adjacent network hubs and at least one of the in and out ports of the hot-swappable hub. In insert indication indicates whether the hot-swap module is coupled to a network hub. When the insert indication indicates that the hot-swap module is connected to a hub, a plurality of switches routes nonglobal switched signals from the out port of a first adjacent hub to the in port of the hot-swappable hub, and routes nonglobal switched signals from out port of the hot-swappable hub to the in port of a second adjacent hub. When the insert indication indicates that the hot-swap module is disconnected from the hub, the plurality of switches route the nonglobal switched signals between the out port of the first adjacent hub and the in port of the second adjacent hub.

## Description

### FIELD OF THE INVENTION

This invention relates to data communications within a computer network. Specifically, this invention relates to a method and apparatus for adding network hubs to and removing network hubs from a network hub stack without interrupting data communications within the stack and between computers connected to the stack.

### DESCRIPTION OF RELATED ART

In the art of computer networking, a network hub stack serves as a common connection point for networked computer systems and peripherals. Typically, such networked computer systems and peripherals are connected to a network hub having a fixed number of connection ports. For example, it is common for a network hub to have 8, 12, 16, 24, or 48 ports. As the size of a network grows, so must the number of connection ports. One common way to provide more connection ports is by connecting a plurality of hubs together into a network hub stack.

Two broad types of data are communicated between hubs in a hub stack. The first type of data is network traffic that consists of the data flowing between computing devices connected to the network, such as desktop PCS, printers, servers, and the like. The second type of data is management data that is used by the network hub stack to manage network traffic.

One method of connecting network hubs together is to use a coaxial cable (often called a ThinLan) to carry the network and management data between hubs. This technique is known in the art as "in-band" management and requires that the hubs generate packets containing the management data and transmit these packets on the coaxial cable along with the network traffic. The coaxial cable is connected to the hub using a "T" connector such that connecting and disconnecting the coaxial cable from the hub does not affect the flow of data to the other hubs. Accordingly, this technique provides the stack "hot-swap" capability because it is possible to connect and disconnect hubs from the stack without affecting the flow of data to other hubs.

In-band management requires fairly advanced hardware because hubs must communicate with each other in the same manner that other computing devices communicate over the network. In addition, if the network is already overloaded with network traffic, the management data adds to the overloaded condition and may be delayed. Finally, if the network malfunctions for some reason (such as a defective network card flooding the network with useless packets), management traffic cannot be transmitted.

Another method of connecting hubs together is to use a coaxial cable to carry the network data between hubs as described above, and some other type of cable to carry the management data between hubs. This technique is known in the art as out-of-band management. Typically, a twisted-pair cable comprising twisted-pair wires with phone-type (RJ-45) connectors is used to carry the management data. Each hub has an "in" port and an "out" port, and the stack is formed be chaining hubs together such that the out port of one hub is connected to the in port of the next hub in the stack. Many of the signals that are carried by the twisted-pair cable are nonglobal and are not passed to all hubs in the stack. These signals transmit messages between specific hubs.

Out-of-band management using separate cables has several advantages. First, the hub does not actually have to communicate packets to and from the coaxial cable, so the hub hardware can be simpler. Second, management traffic does not use any of the bandwidth of the coaxial cable. Finally, management data can be transmitted even if the network is overloaded or dead.

The primary disadvantage of out-of-band management is that it is not completely hot-swappable. While the flow of network traffic between hubs is not interrupted, as soon as one twisted-pair cable is removed, management data cannot be transmitted to all hubs in the stack.

More recently, vendors of network hubs have started using a single backplane (or alternatively, "fat") cable to connect network hubs. These cables typically have between 50 and 70 conductors. A first set of conductors carry global signals, such as power, ground, and network traffic. A second set of conductors carry nonglobal signals that transmit messages between specific hubs. Much like the twisted-pair cables described above, backplane cables are connected to in and out ports on each hub to form a chain of hubs. Within a hub, each conductor of the first set is connected directly from a pin on the in port to a pin on the out port, and to the hub circuitry, thereby forming a "T" connection. Each nonglobal pin is connected directly to the hub circuitry, without a direct connection between the in and the out ports.

The advantages of backplane cables are that there is only one cable needed to form a connection between two adjacent hubs, yet the cables support out-of-band management. This simplifies installation, minimizes cost, and provides a simpler, easier to maintain stack. Also, backplane cables can provide multiple network paths, compared to the single path provided by a coaxial cable. Finally, backplane cables can be used to distribute power signals, thereby eliminating the need to have a power supply in each hub.

The disadvantage of backplane cables is that they render the network hub stack completely non-hot-swappable. As soon as one cable is removed, both management data and network traffic cannot flow to all hubs in the stack. In addition, if power is being distributed throughout the stack, then some hubs will lose power.

### SUMMARY OF THE INVENTION

The present invention is method and apparatus for connecting network hubs to and disconnecting network hubs from a network hub stack without significancy interrupting the flow of data within the network hub stack.

The invention provides a "T" connection for global signals that are distributed to all hubs in the stack, and a switched connection for nonglobal signals that are only distributed between adjacent hubs or specific hubs. The invention includes an insert indication that causes corresponding nonglobal signals from adjacent hubs to be connected together via the switched connection when not connected to a hub, and causes corresponding nonglobal signals to be routed to the in and out ports of the hub when connected to the hub.

In a first embodiment, a "hot-swap" module has four cables with each cable having a connector, with first and second cables that are each connectable to adjacent hubs and third and fourth cables that are each connectable a middle hub. In this embodiment, the switched connections route the nonglobal signals to the middle hub when the third and fourth cables are connected to the middle hub, and route the nonglobal signals between the first and second cables when the third and fourth cables are not connected to the middle hub.

In a second embodiment, a hot-swap module has connectors mounted to a housing and cables that are connectable to adjacent hubs. The connectors coupled to the housing attach to corresponding connectors on a hub.

In a third embodiment, a hot-swap module is used to couple prior art backplane cables to hubs. The hot-swap module includes cable in and out connectors that are connectable to prior art backplane cables, and hub in and out connectors that are connectable to corresponding connectors on a network hub. In this embodiment, the switched connection routes the nonglobal signals to the hub in and out connectors when the module is connected to the hub, and routes the nonglobal signals between the cable in and out connectors when the module is not connected to the hub. Data communication within the hub is ensured as long as the backplane cables are connected to the hot-swap module.

In a first configuration of the insert indication, the insert indication is simply a user activated switch that indicates to the switched connection whether connection has been made to a hub. In this embodiment, communication within the stack is not interrupted if the user sets the switch to a "disconnected" setting before disconnecting from a hub, and sets the switch to a "connected" setting after connecting to a hub. In a second configuration of the insert indication, at least one sensor generates the insertion indication. The sensor is adapted to generate the insertion indication based on whether the backplane cables are coupled to the hub. In a third configuration of the insert indication, the insert indication is generated based on whether a circuit is completed between the hot-swap module and a hub.

### BRIEF DESCRIPTION OF THE DRAWINGS

Figure 1 is a diagram of a prior art computer network.

Figure 2 is a schematic diagram showing the hot-swap circuit of the present invention.

Figure 3 shows an embodiment of the present invention.

Figure 4 shows an embodiment of the insert indication of Figure 2.

Figure 5 shows another embodiment of the present invention.

Figure 6 shows yet another embodiment of the present invention.

### DETAILED DESCRIPTION OF THE PREFERRED EMBODIMENTS

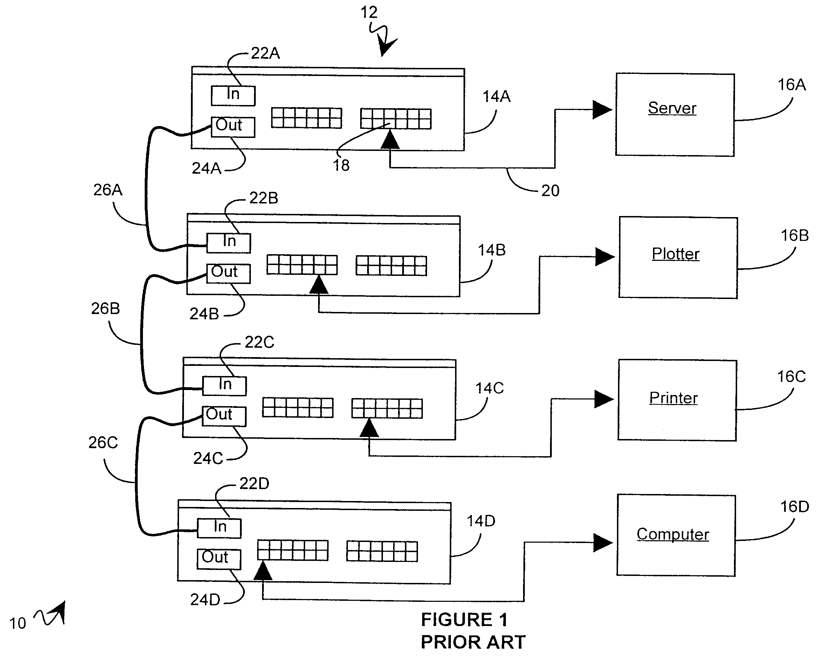

Figure 1 is a diagram of a prior art computer network 10. Prior art computer network 10 includes network hub stack 12, which includes network hubs 14A, 14B, 14C, and 14D, and a variety of networked computing devices, such as server 16A, plotter 16B, laser printer 16C, and desktop computer 16D. Each computing device is coupled to a network port via a network cable. For example, server 16A is coupled to port 18 via network cable 20.

Each network hub has a backplane "in" port and a backplane "out" port to allow that hub to be connected to another hub in the stack. Accordingly, hubs 14A, 14B, 14C, and 14D have backplane in ports 22A, 22B, 22C, and 22D, and backplane out ports 24A, 24B, 24C, and 24D, respectively.

Each network hub in stack 12 is connected to at least one other network hub by a backplane cable. These cables are also known in the art as "fat" cables. Accordingly, port 24A of hub 14A is connected to port 22B of hub 14B via backplane cable 26A, port 24B of hub 14B is connected to port 22C of hub 14C via backplane cable 26B, and port 24C of hub 14C is connected to port 22D of hub 14D via backplane cable 26C. Since hub 14A is at the top of the stack, in port 22A of hub 14A is not used. Likewise, out port 24D of hub 14D is not used.

In prior network hub stacks wherein hubs were connected solely via coaxial cable, a hub could be disconnected from the stack without interrupting data flow throughout the network. However, newer network hub stacks, such as stack 12, use backplane cables. Such backplane cables have a first set of conductors that are bidirectional and global. Within a hub, each conductor of the first set is connected directly from a pin on the in port to a pin on the out port, and to the hub circuitry, thereby forming a "T" connection. Conductors of the first set are used to carry signals such as power, ground, clock signals, and the like

Backplane cables also have a second set of conductors that are nonglobal. Each nonglobal pin is connected directly to the hub circuitry, without a direct connection between the in and the out ports. Conductors of the second set are used to carry messages between specific hubs in a network hub stack.

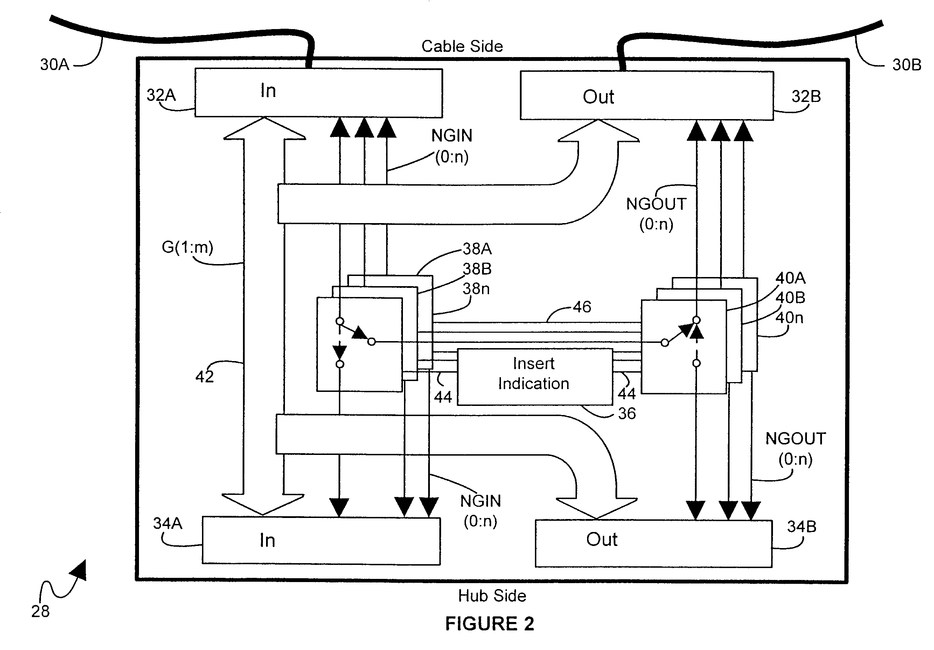

Figure 2 is a schematic diagram showing the hot-swap circuit 28 of the present invention. Circuit 28 includes cable in port 32A, cable out port 32B, hub in port 34A, hub out port 34B, insert indication 36, switches 38A, 38B, and 38n, and switches 40A, 40B, and 40n. Cable in port 32A is coupled to cable 30A, which in turn is connectable to the out port of another hub in the network hub stack. Likewise, cable out port 32B is coupled to cable 30B, which is connectable to the in port of another hub in the network hub stack. In one embodiment, cables 30A and 30B are hard-wired to circuit 28. In another embodiment, cables 30A and 30B are prior art backplane cables, and ports 32A and 32B are connectors similar to those found on a network hub. Both embodiments will be discussed in greater detail below. Ports 34A and 34B are connected to the in and out ports, respectively, of a network hub. The hub connected to ports 34A and 35B is hot-swappable due to circuit 28.

Bus 42 carries global signals G(1:m) between ports 32A, 32B, 34A, and 34B. Global signals G(1:m) include power and ground signals, clock signals, certain types of network traffic, and other signals that can be supplied to all hubs. The portion of bus 42 that connects ports 32A and 32B is required because it provides signals G(1:m) to the hubs connected to cables 30A and 30B when no hub is connected to ports 34A and 34B. In contrast, there is potential redundancy in the portion of bus 42 that is connected to ports 34A and 34B. As described above, prior network hubs provided connectivity for global signals by connecting such signals between corresponding pins of the in and out ports of the hub. Therefore, when connected to such a hub, bus 42 need only provide global signals G(1:m) to either port 34A or port 34B, thereby lowing assembly costs. However, since circuit 28 must connect global signals G(1:m) between ports 32A and 32B, a hub designed to work exclusively with the present invention need not provide connectivity for global signals between the in and out ports of the hub. Accordingly, it may be necessary to provide global signals G(1:m) to both ports 34A and 34B if it is not known which port is used within the hub to provide the global signals. Of course, if it is known which port is used to provide the global signals within the hub (and it would be if the hub is designed to work with a specific embodiment of the present invention) then the global signals need only be provided to one port.

In circuit 28, nonglobal, switched signals NGIN(1:n) and NGOUT(1:n) are signals that cannot be provided globally to all hubs in a stack. Such signals are used to pass messages between specific hubs in a stack. In a typical configuration, a backplane cable such as cable 30A has 68 conductors, with about seven conductors dedicated to nonglobal switched connections, about 34 conductors dedicated to power and ground signals, and the rest of the conductors either carrying other global signals or having no connections. Accordingly, in such a typical configuration *m* (the number of global signals) will be approximately 61 and *n* (the number of nonglobal switched signals) will be approximately seven.

Insert indication 36 generates a signal indicating whether circuit 28 is connected to a network hub via ports 34A and 34B. The signal can assume two states, "connected" and "disconnected", and is supplied to switches 38A, 38B, 38n, 40A, 40B, and 40n via connections 44. When insert indication 36 indicates that a hub is connected, switches 38A, 38B, and 38n connect signals NGIN(0:n) between cable in port 32A and hub in port 34A, and switches 40A, 40B, and 40n connect signals NGOUT(0:n) between cable out port 32B and hub out port 34B. When insert indication 36 indicates that a hub is not connected, switches 38A, 38B, and 38n, and switches 40A, 40B, and 40n correspondingly connect the signals NGIN(0:n) and NGOUT(0:n) together via connections 46, effectively connecting cables 30A and 30B together and bypassing the hub.

Switches 38A, 38B, 38n, 40A, 40B, and 40n can be implemented using any suitable mechanical or electronic switch that is known in the art. For example, the switches may be manual mechanical switches, in which case insert indication 36 is a mechanical signal (such as a user pushing a button) that moves the switches to route the signals as described above. Alternatively, the switches may be implemented by mechanical relays or electronic muxes, in which case insert notification is an electronic signal. Mechanical relays and electronic muxes can also receive power via global signals G(1:m), which will typically include power and ground.

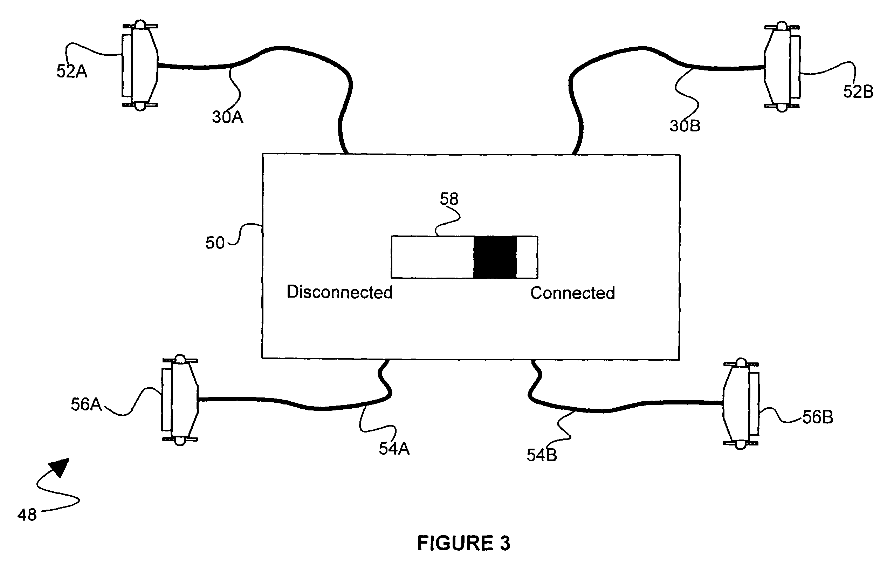

Figure 3 shows an embodiment 48 of the present invention. In Figure 3, circuit 28 of Figure 2 is contained within module 50. Cables 30A and 30B correspond to the similarly referenced cables in Figure 2, and are attached to connectors 52A and 52B, respectively. Port 34A of Figure 2 is implemented by cable 54A and connector 56A, and Port 34B is implemented by cable 54B and connector 56B. The hub connected to connectors 56A and 56B is hot-swappable. Each connector 52A and 52B is coupled to an adjacent hub in the stack. If one of these connectors is connected directly to a hub, then that hub is not hot-swappable. Alternatively, a gender changing adapter can be connected to connector 52B to couple connector 52B to the connector 52A of another module 48. In this manner, a series of modules can be chained together.

Insert indication 36 of Figure 2 is implemented by switch 58. As discussed above, switch 58 can provide a mechanical signal if mechanical switches are used or can provide an electrical signal if relays or muxes are used. In the embodiment shown in Figure 3, a user would slide switch 58 to the connected position after connecting connectors 56A and 56B to a hub, and slide switch 58 to the disconnected position before disconnecting connectors 56A and 56B from a hub. The embodiment shown in Figure 3 is also useful when troubleshooting a problem in the network hub stack. The nonglobal switched signals of each hub can be selectively by passed from that hub by toggling the switch 58 associated with each hub, without having to physically disconnect the cables from the hub.

In an alternative embodiment, at least one of the connectors 56A and 56B are provided with an insertion detector, which may be a contact switch, an optical switch, or other types of detectors or sensors as are known in the art. If both connectors are provided with an insertion detector, the signals provided by the insertion detectors must be gated such that the "connected" signal is generated only when both connectors are inserted, and the "disconnected" signal is generated when either connector is removed. Preferably, each insertion detector is arranged to indicate that the connector is disconnected before electrical contact is terminated between the hub and the respective connector, thereby ensuring that there is not a time period wherein a connector has been disconnected from a hub and circuit 28 has not yet switched to bypass the hub.

A single insertion detector may be used in one of the connectors. However, such a configuration would require that the connector with the detector be removed first and inserted last.

In another alternative embodiment, a loop between a pin on the in port of the hub and the out port of the hub is used to generate the insertion indication signal.

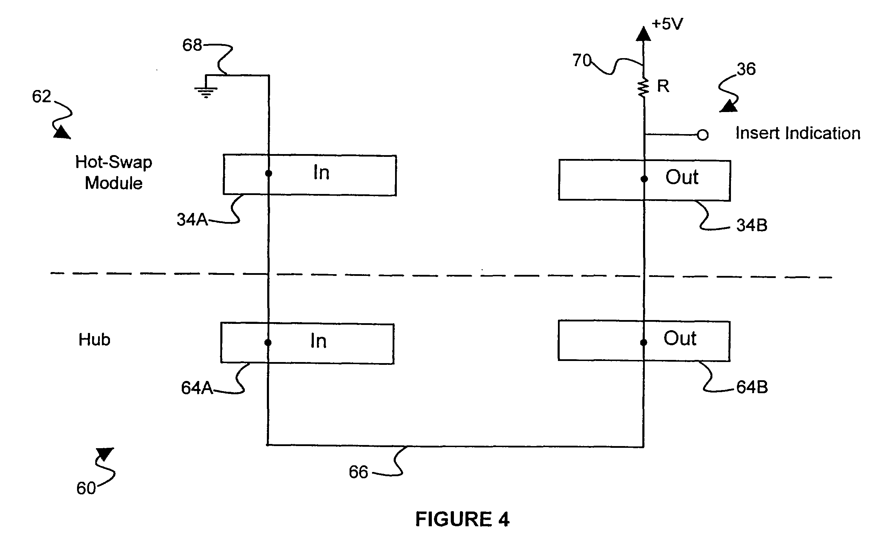

Figure 4 shows another embodiment of insert indication 36 of Figure 2. In Figure 4, hot-swap module 62 having circuit 28 of Figure 2 is coupled to hub 60. Within module 60, ground signal 68 is provided to a pin on port 34A of module 60, which in turn is coupled to a corresponding pin on port 64A of hub 60. Within hub 60 the pin on port 64A is coupled to a corresponding pin on port 64B of hub 60 via wire 66. The circuit is completed to a corresponding pin on port 34B of module 62, which in turn is coupled to five volt power source 70 via resistance R. Insert indication 36 is provided at the circuit node of resistance R and the pin of port 34B.

When module 62 is connected to hub 60, ground 68 pulls insert indication 36 low. When either port 34A or 34B is disconnected from hub 60, supply 70 and resistance R pull insert indication 36 high. Accordingly, indication 36 is high when disconnected and low when connected.

To ensure that insertion indication 36 does not indicate a connected state before connections are actually established, the pins in the connectors that carry the ground loop signal can be shorted to ensure that indication 36 is not pulled low until all other pins have made contact.

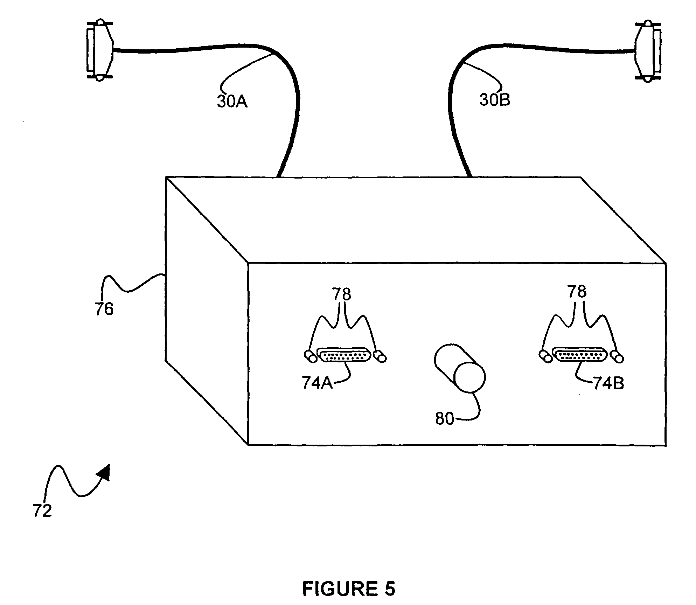

Figure 5 shows another embodiment 72 of the hot-swap module. This embodiment is similar to the embodiment shown in Figure 3, however in this embodiment, connectors 74A and 74B (which implement ports 34A and 34B of Figure 2) are mounted to a housing 76. Screws 78 fasten housing 76 to a network hub, providing that hub with the ability to be added or removed from the stack without interrupting data flow within the stack. Similar to embodiment 48 in Figure 3, cables 30A and 30B are connected to housing 76.

Also shown in Figure 5 is another embodiment of insert indication 36. Button 80 implements insert indication 36 and protrudes from housing 76. Inside housing 80 is a switch responsive to the position of button 80. The switch generates the insert indication when button 80 is pressed against the housing of the hub to which housing 76 is attached.

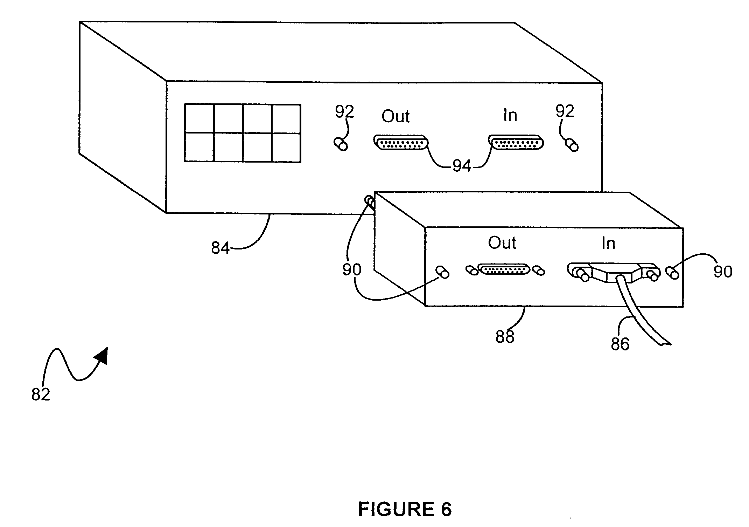

Figure 6 shows yet another embodiment 82 of the hot-swap module. This embodiment provides hot-swap capability to a hub (such as hub 84 in Figure 6) while allowing use of prior art backplane cables (such as cable 86 in Figure 6).

The cables from adjacent hubs are connected to the in and out connectors mounted on housing 88. These cables must remain coupled to housing 88 to ensure that data flow throughout the stack is uninterrupted. Housing 88 is in turn fastened to hub 84 via screws 90, which screw into threaded studs 92.

The hub side of housing 88 is similar to the hub side shown in Figure 5, with connectors coupled to housing 88 that mate with connectors 94 of hub 84.

In another embodiment, the hub side of housing 88 includes attached cables that are connected to the hub (similar to the hub side of embodiment 48 of Figure 3). While the mounted connectors shown in Figure 5 allow for easy installation and a single insertion detector, separate cables allow the present invention to by used with a variety of hubs wherein the spacing between the in and out ports may vary from hub to hub.

Although the present invention has been described with reference to preferred embodiments, workers skilled in the art will recognize that changes may be made in form and detail without departing from the spirit and scope of the invention.

## Claims

1. An apparatus that allows a network hub to be added to and removed from a network hub stack without interrupting communication with the network hub stack, the apparatus comprising:
first and second adjacent hub connector means, with each adjacent hub connector means connectable to an adjacent network hub;
first and second hub connector means, with each hub connector means connectable to the network hub;
global signal connection means, for providing a continuous connection for global signals between the first and second adjacent hub connector means and at least one of the first and second hub connector means;
insert indication means, for providing an insert indication having a connected state when both the first and second hub connector means are connected to the network hub and a disconnected state when either the first or second hub connector means are disconnected from the network hub; and
switching means for routing nonglobal switched signals between the first adjacent hub connector means and the first hub connector means, and between the second adjacent hub connector means and the second hub connector means when the insertion indication means assumes a connected state, and for routing nonglobal switched signals between the first and second adjacent hub connector means when the insertion indication means assumes a disconnected state.

2. The apparatus of claim 1 wherein the insert indication means includes a switch having a connected position and a disconnected position, wherein the insertion indication means assumes the connected state when the switch is positioned in the connected position, and the insertion indication means assumes the disconnected state when the switch is placed in the disconnected position.

3. The apparatus of claim 1 wherein the insert indication means comprises at least one insertion detector attached to at least one of the first and second hub connector means.

4. The apparatus of claim 1 wherein the insertion indication means comprises a first insertion detector attached to the first connector means and a second insertion detector attached to the second connector means, with each insertion detector capable of indicating whether the hub connector means attached to that insertion detector is attached to the network hub or detached from the network hub, and the insertion indication means assumes the connected state when both the first and second insertion detectors indicate that the first and second connector means, respectively, are attached to the network hub, and the insertion indication means assumes the disconnected state when either the first or second insertion detectors indicate that either the first or second connector means, respectively, are detached from the network hub.

5. The apparatus of claim 1 wherein the insert indication comprises a circuit having a loop signal that travels from the first connector means through the network hub to the second connector means when the first and second connector means are each attached to the network hub, wherein the circuit is interrupted when either the first or second connector is disconnected from the network hub, the insert indication assumes the connected state when the loop signal is present at the second connector means, and the insert indication assumes the disconnected state when the loop signal is not present at the second connector means.

6. The apparatus of claim 1 wherein the first and second adjacent hub connector means each comprise a cable coupled to a connector, with the connector connectable to a connector of the adjacent hub.

7. The apparatus of claim 1 wherein the first and second hub connector means each comprise a cable coupled to a connector, with the connector connectable to a connector of the network hub.

8. The apparatus of claim 1 and further comprising:
a housing that encloses the switching means.

9. The apparatus of claim 8 wherein the first and second connector means comprise connectors mounted to the housing.

10. The apparatus of claim 9 wherein the insert indication means comprises a button mounted on the housing and is configured to signal the connected state when the connectors mounted to the housing are connected to connectors of the network hub, and is configured to signal the disconnected state when either connector mounted to the housing is disconnected from connectors of the network hub.

11. The apparatus of claim 9 wherein the first and second adjacent hub connector means comprise connectors mounted to the housing and backplane cables attached to the connectors.

12. A method of adding a network hub between first and second adjacent network hubs in a network hub stack without interrupting a flow of data within the network hub stack, wherein the flow of data is provided by global signals provided to all network hubs in the network hub stack and nonglobal switched signals that flow between specific network hubs in the network hub stack, the method comprising:
coupling the global signals to the network hub stack;
detecting an insert indication having a connected state;
decoupling based on the connected state the nonglobal switched signals coupled between the first and second adjacent network hubs;
coupling to the network hub based on the connected state the nonglobal switched signals that are coupled to the first adjacent hub and were previously coupled to the second adjacent hub; and
coupling to the network hub based on the connected state the nonglobal switched signals that are coupled to the second adjacent hub and were previously coupled to the first.

13. The method of claim 12 wherein detecting an insert indication having a connected state comprises detecting a presence of a loop signal that flows from a first connector that is detachable from the network hub, through the network hub, to a second connector that is detachable from the network hub, wherein the insert indication assumes the connected state if the loop signal is present at the second connector.

14. A method of removing a network hub from between first and second adjacent network hubs in a network hub stack without interrupting a flow of data within the network hub stack, wherein the flow of data is provided by global signals provided to all network hubs in the network hub stack and nonglobal switched signals that flow between specific network hubs in the network hub stack, the method comprising:
decoupling the global signals from the network hub stack;
detecting an insert indication having a disconnected state;
decoupling from the network hub based on the disconnected state the nonglobal switched signals that are coupled to the first adjacent hub;
decoupling from the network hub based on the disconnected state the nonglobal switched signals that are coupled to the second adjacent hub; and
coupling together based on the connected state the nonglobal switched signals from the first and second adjacent network hubs that were previously connected to the network hub.

15. The method of claim 14 wherein detecting an insert indication having a disconnected state comprises detecting the absence of a loop signal that flows from a first connector that is detachable from the network hub, through the network hub, to a second connector that is detachable from the network hub, wherein the insert indication assumes the disconnected state if the loop signal is absent at the second connector.

16. A hot-swap module that allows a network hub to be added to and removed from a network hub stack without interrupting communication within the network hub stack, the hot-swap module comprising:
a housing;
a hub in connector connectable to the in port of the network hub;
a hub out connector connectable to the out port of the network hub;
an adjacent hub in connector connectable to a cable that is attached to an out port of a first adjacent hub;
an adjacent hub out connector connectable to a cable that is attached to an in port of a second adjacent hub;
a plurality of global signal conductors connecting global signals between corresponding pins of the adjacent hub in connector, the adjacent hub out connector, and at least one of hub in connector and the hub out connector;
an insert indicator that provides an insert indication having a connected state when both the hub in and hub out connectors are connected to the network hub and a disconnected state when either the hub in or hub out connectors are disconnected from the network hub;
a plurality of switches responsive to the insert indicator; and
first, second, third, and fourth pluralities of nonglobal conductors connecting nonglobal signals from the adjacent hub in connector, the adjacent hub out connector, the hub in connector, and the hub out connector, respectively, to the plurality of switches, wherein the plurality of switches routes nonglobal switched signals between corresponding pins of the adjacent hub in connector and the hub in connector, and between corresponding pins of the adjacent hub out connector and the hub out connector when the insert indicator assumes the connected stated, and routes nonglobal switched signals between corresponding pins of the adjacent hub in connector and the adjacent hub out connector when the insert indicator assumes the disconnected state.
